# FASCICULE DE BREVET EUROPEEN

(11) **EP 1 032 226 B1**
(45) Date de publication et mention de la délivrance du brevet: **08.08.2007**
(21) Numéro de dépôt: 00400441.2
(22) Date de dépôt: 17.02.2000
(51) Int. Cl.: H04Q 7/26, H04Q 7/30

(54) **Dispositif permettant d'utiliser des terminaux radiotéléphoniques mobiles fonctionnant selon une première norme dans un réseau de télécommunication privé fonctionnant selon une seconde norme**
Einrichtung zur Verwendung von Mobiltelefon-Endgeräten nach einem ersten Standard in einem privaten Telekommunikationsnetz, das einem zweiten Standard benützt
Apparatus providing usage of mobile radio telephone terminals operating according to a first standard in a private telecommunications system operating according to a second standard

(30) Priorité: 22.02.1999 FR 9902183
(43) Date de publication de la demande: 30.08.2000
(73) Titulaire: Alcatel Lucent, 75008 Paris (FR)
(72) Inventeur: Barbey, Jean-Pierre, 95800 Cergy (FR); Criqui, Jean-Francois, 92600 Asnieres (FR); Rousseau, Jean-René, 95000 Neuville S/Oise (FR)
(74) Mandataire: Sciaux, Edmond

(56) Documents cités:
- EP-A- 0 849 965
- WO-A-97/12488

## Description

L'invention concerne un dispositif permettant d'utiliser des radiotéléphones GSM dans un réseau radiotéléphonique DECT. Un réseau radiotéléphonique DECT est utilisé classiquement pour permettre aux employés d'une entreprise d'utiliser les services d'un commutateur privé, tout en bénéficiant d'une certaine mobilité sur le site de cette entreprise. Un tel réseau comporte un commutateur privé, des stations d'émission-réception appelées station de base DECT, des terminaux radiotéléphoniques mobiles DECT, et éventuellement des terminaux téléphoniques fixes.

Un tel réseau permet une certaine mobilité des employés à l'intérieur des locaux d'un site de l'entreprise. Mais certains employés sont amenés à se déplacer à l'extérieur de l'entreprise. Pour pouvoir être joints à peu près partout, ils emportent chacun un terminal radiotéléphonique GSM bénéficiant d'un abonnement pour utiliser un réseau GSM public. Ils sont donc censés utiliser au moins deux types de terminal différents selon qu'ils sont ou non dans un site de l'entreprise.

La multiplication des terminaux pour un même employé n'est pas pratique, notamment à cause de la multiplication des numéros d'appel. En outre, les employés sont tentés d'utiliser uniquement leur terminal GSM bien que le coût des communications soit plus cher que celui des communications via le réseau privé DECT, et bien que le réseau GSM public ne fournisse pas tous les services qu'on peut obtenir du commutateur privé d'une entreprise. D'autre part, les usagers extérieurs à une entreprise sont tentés d'appeler les employés de cette entreprise via leurs terminaux GSM, et non via les terminaux fixes ou DECT, pour maximiser les chances de les joindre. Il est donc souhaitable que les employés d'une entreprise puissent utiliser leurs terminaux GSM via le réseau privé de l'entreprise.

Un réseau radiotéléphonique GSM permettant d'utiliser de terminaux DECT dans le réseau est connu de WO 97112488-A (SIEMENS AKTIENGESELLSCHAFT et al.) et est publié à 3 Avril 1997.

Le but de l'invention est de permettre aux employés d'une entreprise d'utiliser leurs terminaux GSM dans une entreprise au même coût et avec les mêmes services que s'il s'agissait de terminaux DECT ; et de permettre à des visiteurs extérieurs, dûment autorisés, à utiliser leurs terminaux GSM comme des terminaux DECT de l'entreprise, pour accéder au réseau public fixe via le commutateur privé de l'entreprise, ou pour être appelés via le réseau public fixe.

Un premier objet de l'invention est un dispositif permettant d'utiliser des terminaux radiotéléphoniques mobiles fonctionnant selon une première norme dans un réseau de télécommunication privé fonctionnant selon une seconde norme, ce réseau privé comportant :
- au moins un commutateur privé,
- des terminaux radiotéléphoniques mobiles fonctionnant selon la seconde norme,
- des stations de base fonctionnant selon la seconde norme et ayant des entrées-sorties couplées à des entrées-sorties de ce commutateur privé, ces entrées-sorties étant munies d'une interface spécifique à ces stations de base ;
- un dispositif d'émission-réception radio fonctionnant selon la première norme, caractérisé en ce qu'il comporte un dispositif d'émission-réception radio fonctionnant selon la seconde norme, et des moyens pour appliquer :
- une procédure de déclaration et de localisation dans ce réseau privé pour des terminaux fonctionnant selon la première norme ;
- un transcodage du code de parole selon la première norme en un code de parole qui est accepté par un commutateur privé (PABX), et inversement;
- et une conversion du protocole de signalisation normalisé par la première norme, en un protocole de signalisation qui est accepté par le commutateur privé , et inversement.

Un second objet de l'invention est un dispositif permettant d'utiliser des terminaux radiotéléphoniques mobiles fonctionnant selon une première norme dans un réseau de télécommunication privé fonctionnant selon une seconde norme, ce réseau comportant :
- au moins un commutateur privé ,
- des terminaux radiotéléphoniques mobiles fonctionnant selon la seconde norme,
- des stations de base fonctionnant selon la seconde norme et ayant des entrées-sorties couplées à des entrées-sorties de ce commutateur privé, ces entrées-sorties étant munies d'une interface spécifique à ces stations de base fonctionnant selon la seconde norme ;
- un dispositif d'émission-réception radio fonctionnant selon la première norme, caractérisé en ce qu'il comporte une liaison filaire permettant d'échanger des trames de données, selon la seconde norme, avec un commutateur du réseau privé, et des moyens pour appliquer :
- une procédure de déclaration et de localisation dans ce réseau privé pour des terminaux fonctionnant selon la première norme ;
- un transcodage du code de parole selon la première norme en un code de parole qui est accepté par un commutateur privé, et inversement;
- et une conversion du protocole de signalisation normalisé par la première norme en un protocole de signalisation qui est accepté par le commutateur privé, et inversement.

Les dispositifs ainsi caractérisés sont vus comme des stations de base fonctionnant selon la première norme par les terminaux fonctionnant selon la première norme, et sont vus chacun comme n terminaux fonctionnant selon la seconde norme par le réseau privé, lorsqu'il y a n terminaux fonctionnant selon la première norme qui sont en communication avec un de ces dispositifs.

L'invention sera mieux comprise et d'autres caractéristiques apparaîtront à l'aide de la description ci-dessous et des figures l'accompagnant :
- La figure 1 représente le schéma synoptique d'un exemple de réseau privé DECT comportant deux exemples de réalisation du dispositif selon l'invention.
- La figure 2 représente le schéma synoptique d'un exemple de réalisation du dispositif selon l'invention.

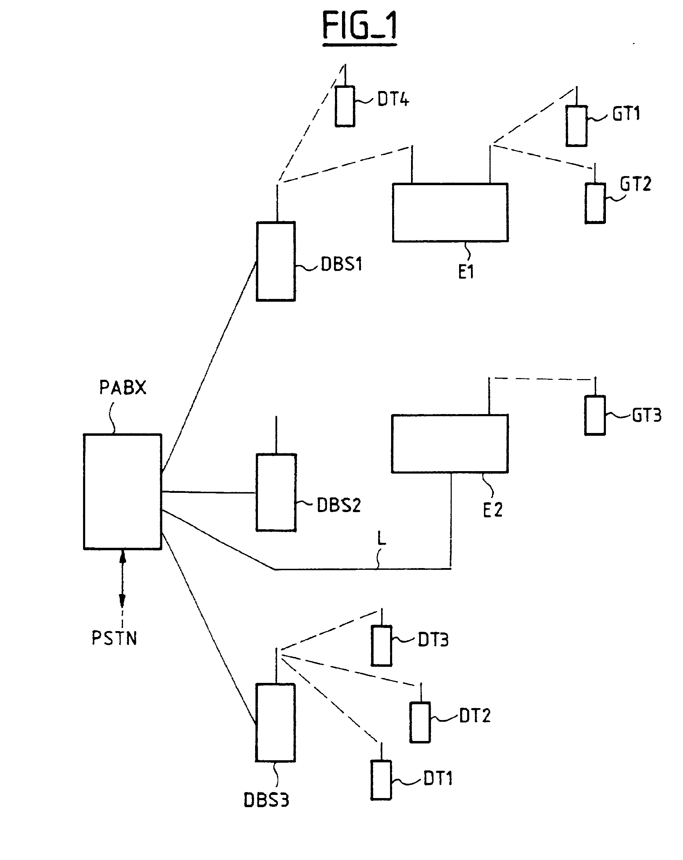

Le réseau privé représenté sur la **figure 1** comporte :
- un commutateur privé PABX,
- des stations de base de type DECT : DBS1, DBS2, DBS3, reliées au commutateur privé PABX,
- et deux dispositifs E1 et E2 selon l'invention.

Des terminaux DECT : DT1, DT2, DT3, DT4, communiquent avec les stations de base DECT : DBS1, DBS3, par des liaisons radio conformes à la norme DECT. Le site de l'entreprise considérée est desservi en outre par les dispositifs E1 et E2 selon l'invention, qui permettent d'établir des liaisons radio conformes à la norme GSM, avec des terminaux GSM classiques GT1, GT2, GT3. Le dispositif E1 est relié au réseau privé par une liaison radio conforme à la norme GSM, établie avec une station de base DECT, DBS1 par exemple. Le dispositif E2 est relié au réseau privé par une liaison filaire L. Le commutateur privé PABX est relié notamment à un réseau public fixe PSTN.

Les terminaux GSM peuvent être utilisés :
- soit de manière classique, c'est à dire communiquer via un réseau public GSM, en conservant tous les services fournis par ce réseau public GSM;
- soit choisir le réseau privé, se localiser dans ce réseau, et communiquer avec le réseau privé , et avec le réseau public fixe PSTN via le réseau privé, ce qui leur permet de bénéficier de tous les services de ce réseau prive, notamment : des communications locales avec les autres terminaux fixes ou mobiles du réseau privé, et des communications via le réseau public fixe PSTN. Pour passer par le réseau privé, l'usager d'un terminal GSM doit tout d'abord déclarer son terminal GSM, une fois pour toutes, auprès du réseau privé, en composant un numéro et un code particulier sur son clavier de terminal. Cette procédure de déclaration auprès des dispositifs E1 et E2 permet d'attribuer ce droit d'accès à une liste d'usagers, employés de l'entreprise et certains visiteurs.

Chaque dispositif E1 et E2 mémorise, pour chacun des terminaux GSM qui sont considérés comme appartenant au réseau privé, c'est à dire ceux appartenant à l'entreprise et ceux des visiteurs qui ont été dûment déclarés :
- l'identité internationale d'abonné mobile IMSI (International mobile subscriber identity), et l'identité temporaire correspondante TMSI (Temporary mobile subscriber identity),
- l'identité DECT appelée IPUI (International Portable User Identity), utilisée dans le commutateur PABX, et le numéro d'annuaire,
- la relation IMSI/numéro d'annuaire,
- la relation IPUI/numéro d'annuaire,
- et optionnellement l'identité de la société propriétaire du terminal.

Tout se passe, pour le commutateur PABX, comme s'il traitait des terminaux DECT via une station de base de type DECT, telle que DBS1, DBS2, DBS3 ; et tout se passe pour les terminaux GSM : GT1, GT2, GT3, comme s'ils communiquaient avec une station de base GSM d'un réseau public GSM.

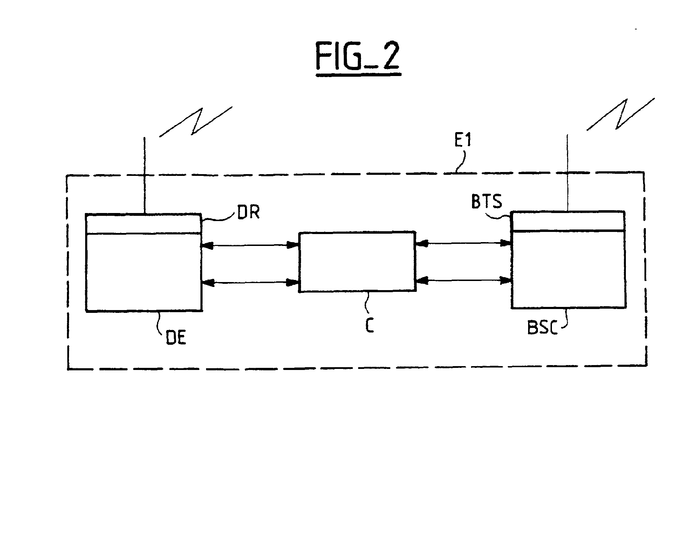

La **figure 2** représente le schéma synoptique de l'exemple de réalisation E1 du dispositif selon l'invention. Cet exemple de réalisation comporte :
- une interface radio DR conforme à la norme DECT,
- un dispositif DE relié à cette interface radio DR et imitant n terminaux DECT, n étant le nombre maximal de terminaux GSM devant être desservis par le dispositif E1 ;
- une station de base GSM, BTS, constituant une interface radio GSM ayant la capacité nécessaire pour communiquer avec n terminaux GSM ;
- un contrôleur de station de base GSM, BSC, relié à la station de base BTS ;
- et un dispositif de conversion, C, couplant le dispositif DE et le contrôleur de stations de base BSC.

Le dispositif de conversion C réalise les fonctions suivantes :
- procédure de déclaration pour n terminaux GSM, le dispositif C et le dispositif DE se comportant comme n terminaux DECT vis à vis de la station de base DBS1 ;
- transcodage du code de parole GSM (16 Kb/s) en un code de parole qui est accepté par le commutateur privé PABX (64 Kb/s), et inversement ;
- conversion du protocole de signalisation CM normalisé par le GSM, en protocole de signalisation DECT/GAP qui est accepté par le commutateur privé PABX, et inversement ;
- et déclaration des terminaux GSM des visiteurs.

Pendant la procédure de localisation, le dispositif de conversion C ne mémorise rien, il retransmet la requête du terminal au commutateur PABX.

Optionnellement, le dispositif C permet de crypter les communications entre les terminaux GSM : GT1,GT2, GT3, etc, et le dispositif E1, sans disposer de l'algorithme secret de cryptage de chaque terminal. Au préalable, une opération manuelle consiste à fournir à la carte SIM (Subscriber Identity Module) du terminal GSM un nombre aléatoire et une clé secrète au terminal, pour lui faire calculer, par son algorithme secret, un résultat fonction de ce nombre aléatoire et de cette clé. Le dispositif C mémorise, pour chaque identité IMSI de terminal GSM, le nombre aléatoire, la clé secrète, et le résultat. Pour lancer le cryptage d'une communication, le dispositif C envoie au terminal cette clé secrète et ce nombre aléatoire.

Le dispositif E2 ne diffère du dispositif E1 que par le fait qu'il ne comporte pas d'interface radio DR conforme à la norme DECT. Il échange des trames DECT avec le commutateur PABX, directement sur la liaison filaire L.

## Revendications

1. Dispositif (E1) permettant d'utiliser des terminaux radiotéléphoniques mobiles fonctionnant selon une première norme (GT1, GT2, GT3) dans un réseau de télécommunication privé fonctionnant selon une seconde norme, ce réseau privé comportant :
- au moins un commutateur privé (PABX),
- des terminaux radiotéléphoniques mobiles fonctionnant selon la seconde norme (DT1, DT2),
- des stations de base (DBS1, DBS2, DBS3) fonctionnant selon la seconde norme et ayant des entrées-sorties couplées à des entrées-sorties de ce commutateur privé (PABX), ces entrées-sorties étant munies d'une interface spécifique à ces stations de base ;
- un dispositif d'émission-réception radio fonctionnant comme une station de base selon la première norme (BTS), **caractérisé en ce qu'**il comporte un dispositif d'émission-réception radio fonctionnant comme une pluralité de terminaux selon la seconde norme (DE), et des moyens (C) pour appliquer :
- une procédure de déclaration et de localisation dans ce réseau privé pour des terminaux fonctionnant selon la première norme (GT1, GT2, GT3) ;
- un transcodage du code de parole selon la première norme en un code de parole qui est accepté par un commutateur privé (PABX), et inversement ;
- et une conversion du protocole de signalisation normalisé par la première norme, en un protocole de signalisation qui est accepté par le commutateur privé (PABX), et inversement.

2. Dispositif (E2) permettant d'utiliser des terminaux radiotéléphoniques mobiles fonctionnant selon une première norme (GT1, GT2, GT3) dans un réseau de télécommunication privé fonctionnant selon une seconde norme, ce réseau comportant :
- au moins un commutateur privé (PABX),
- des terminaux radiotéléphoniques mobiles fonctionnant selon la seconde norme (DT1, DT2),
- des stations de base (DBS1, DBS2, DBS3) fonctionnant selon la seconde norme et ayant des entrées-sorties couplées à des entrées-sorties de ce commutateur privé (PABX), ces entrées-sorties étant munies d'une interface spécifique à ces stations de base fonctionnant selon la seconde norme ;
- un dispositif d'émission-réception radio fonctionnant comme une station de base selon la première norme (BTS), **caractérisé en ce qu'**il comporte une liaison filaire (L) permettant d'échanger des trames de données, selon la seconde norme, avec un commutateur (PABX) d'un réseau privé, et des moyens (C) pour appliquer :
- une procédure de déclaration et de localisation dans ce réseau privé pour des terminaux fonctionnant selon la première norme (GT1, GT2, GT3) ;
- un transcodage du code de parole selon la première norme en un code de parole qui est accepté par un commutateur privé, et inversement ;
- et une conversion du protocole de signalisation normalisé par la première norme en un protocole de signalisation qui est accepté par un commutateur privé (PABX), et inversement.

3. Dispositif selon la revendication 1 ou la revendication 2, **caractérisé en ce qu'** il comporte en outre des moyens (C) pour appliquer : un transcodage du code de parole selon la première norme en un code de parole qui est accepté par le commutateur privé (PABX), et inversement.

## Claims

1. System (E1) enabling use of mobile telephone terminals to a first standard (GT1, GT2, GT3) in a private telecommunication network to a second standard, the private network including:
- at least one private automatic branch exchange (PABX);
- mobile telephone terminals to the second standard (DT1, DT2);
- base stations (DBS1, DBS2, DBS3) to the second standard having input-output ports connected to input-output ports of the private automatic branch exchange (PABX), said input-output ports having an interface specific to said base stations;
- a radio transceiver as a base station to the first standard (BTS), **characterised in that** it comprises a radio transceiver as a plurality of terminals to the second standard (DE), and means (C) for carrying out:
- a declaration and location procedure in the private network for terminals to the first standard (GT1, GT2, GT3);
- transcoding between a speech code to the first standard and a speech code accepted by a private automatic branch exchange (PABX), and vice-versa; and
- conversion between a signalling protocol standardised by the first standard and a signalling protocol accepted by the private automatic branch exchange (PABX), and vice-versa.

2. System (E2) for enabling use of mobile telephone terminals to a first standard (GT1, GT2, GT3) in a private telecommunication network to a second standard, said network including:
- at least one private automatic branch exchange (PABX);
- mobile telephone terminals to the second standard (DT1, DT2);
- base stations (DBS1, DBS2, DBS3) to the second standard having input-output ports connected to input-output ports of the private automatic branch exchange (PABX), said input-output ports having an interface specific to said base stations to the second standard;
- a radio transceiver as a base station to the first standard (BTS), **characterised in that** it comprises a cable link (L) to a private automatic branch exchange (PABX) of a private network for exchanging data frames to the second standard, and means (C) for carrying out:
- a declaration and location procedure in said private network for terminals to the first standard (GT1, GT2, GT3);
- transcoding between a speech code to the first standard and a speech code accepted by a private automatic branch exchange, and vice-versa; and
- conversion between the signalling protocol standardised by the first standard and a signalling protocol accepted by the private automatic branch exchange (PABX), and vice-versa.

3. System according to claim 1 or claim 2, **characterised in that** it further includes means (C) for carrying out transcoding between a speech code to the first standard and a speech code accepted by the private automatic branch exchange (PABX), and vice-versa.

## Patentansprüche

1. Einrichtung (E1) zur Verwendung von Mobiltelefon-Endgeräten nach einem ersten Standard (GT1, GT2, GT3) in einem privaten Telekommunikationsnetz, das einen zweiten Standard benützt, wobei dieses private Netz folgendes einschließt:
- mindestens eine private Telekommunikationsanlage (PABX),
- Mobiltelefon-Endgeräte nach dem zweiten Standard (DT1, DT2),
- Basisstationen (DBS1, DBS2, DBS3) nach dem zweiten Standard und mit Eingängen/Ausgängen, die an Eingänge/Ausgänge dieser privaten Telekommunikationsanlage (PABX) gekoppelt sind, wobei diese Eingänge/Ausgänge mit einer für diese Basisstationen spezifischen Schnittstelle versehen sind;
- eine Funk-Sende-/Empfangseinrichtung, die wie eine Basisstation nach dem ersten Standard (BTS) arbeitet, **dadurch gekennzeichnet, dass** sie eine Funk-Sende-Empfangseinrichtung enthält, die wie eine Vielzahl von Endgeräten nach dem zweiten Standard (DE) arbeitet, und Mittel (C), um folgendes anzuwenden:
- ein Verfahren zur Anmeldung und Lokalisierung in diesem privaten Netz für Endgeräte, die nach dem ersten Standard arbeiten (GT1, GT2, GT3);
- eine Umcodierung vom Sprachcode nach dem ersten Standard in einen Sprachcode, der von einer privaten Telekommunikationsanlage (PABX) akzeptiert wird, und umgekehrt;
- und eine Umwandlung des mit dem ersten Standard standardisierten Signalisierungsprotokolls in ein Signalisierungsprotokoll, das von der privaten Telekommunikationsanlage (PABX) akzeptiert wird, und umgekehrt.

2. Einrichtung (E2) zur Verwendung von Mobiltelefon-Endgeräten nach einem ersten Standard (GT1, GT2, GT3) in einem privaten Telekommunikationsnetz, das einen zweiten Standard benützt, wobei dieses Netz folgendes einschließt:
- mindestens eine private Telekommunikationsanlage (PABX),
- Mobiltelefon-Endgeräte nach dem zweiten Standard (DT1, DT2),
- Basisstationen (DBS1, DBS2, DBS3) nach dem zweiten Standard und mit Eingängen/Ausgängen, die an Eingänge/Ausgänge dieser privaten Telekommunikationsanlage (PABX) gekoppelt sind, wobei diese Eingänge/Ausgänge mit einer für diese Basisstationen, die den zweiten Standard benützen, spezifischen Schnittstelle versehen sind;
- eine Funk-Sende-/Empfangseinrichtung, die wie eine Basisstation nach dem ersten Standard (BTS) funktioniert, **dadurch gekennzeichnet, dass** sie eine Drahtverbindung (L) enthält, um Datenrahmen nach dem zweiten Standard mit einer Telekommunikationsanlage (PABX) eines privaten Netzes auszutauschen, und Mittel (C) enthält, um folgendes anzuwenden:
- ein Verfahren zur Anmeldung und Lokalisierung in diesem privaten Netz für Endgeräte, die nach dem ersten Standard arbeiten (GT1, GT2, GT3);
- eine Umcodierung vom Sprachcode nach dem ersten Standard in einen Sprachcode, der von einer privaten Telekommunikationsanlage akzeptiert wird, und umgekehrt;
- und eine Umwandlung des mit dem ersten Standard standardisierten Signalisierungsprotokolls in ein Signalisierungsprotokoll, das von einer privaten Telekommunikationsanlage (PABX) akzeptiert wird, und umgekehrt.

3. Einrichtung gemäß Anspruch 1 oder Anspruch 2, **dadurch gekennzeichnet, dass** sie außerdem Mittel (C) enthält um folgendes anzuwenden: eine Umcodierung vom Sprachcode nach dem ersten Standard in einen Sprachcode, der von der privaten Telekommunikationsanlage (PABX) akzeptiert wird, und umgekehrt.
